# EUROPÄISCHE PATENTSCHRIFT

(11) **EP 1 273 488 B1**
(45) Veröffentlichungstag und Bekanntmachung des Hinweises auf die Patenterteilung: **12.10.2011**
(21) Anmeldenummer: 02009345.6
(22) Anmeldetag: 03.05.2002
(51) Int. Cl.: B60R 21/20

(54) **Gasgenerator für einen Lenkradairbag**
Gas generator for a steering wheel airbag
Générateur de gas pour un airbag de volant

(30) Priorität: 06.07.2001 DE 10132394
(43) Veröffentlichungstag der Anmeldung: 08.01.2003
(73) Patentinhaber: Carl Freudenberg KG, 69469 Weinheim (DE)
(72) Erfinder: Leibach, Markus, 79410 Schweighof (DE); Back, Friederich, 79379 Müllheim (DE); Dürre, Markus, 79395 Neuenburg (DE); Berg, Thilo, 67578 Gimbsheim (DE)

(56) Entgegenhaltungen:
- EP-A- 1 026 050
- EP-A- 1 101 662
- EP-A- 1 101 663
- WO-A-00/15470
- US-A- 6 164 689

## Beschreibung

### Technisches Gebiet

Die Erfindung betrifft einen Gasgenerator mit einem Behälter zur Aufnahme der Treibstoffpatrone für einen Airbag am Lenkrad eines Kraftfahrzeuges, wobei der Gasgenerator als Schwingungstilger ausgebildet ist und über ein gasundurchlässiges, die Form eines hohlen Zylinders oder Kegelstumpfs aufweisenden Federelements aus polymerem Material mit dem Airbaggehäuse verbunden ist und die Verbindung zwischen dem Federelement und dem Behälter und/oder zwischen dem Federelement und dem Airbaggehäuse als formschlüssige Schnappverbindung beziehungsweise -verbindungen ausgebildet sind, wobei das Federelement als separater Einsatz ausgestaltet ist und an seinen Rändern mit Elementen der Schnappverbindung versehen ist.

Bei Kraftfahrzeugen können während der Fahrt oder auch im Stillstand mit einem laufenden Motor Schwingungen auftreten, die sich auf die Lenksäule und von dort aus auf das Lenkrad übertragen. Um diesen Schwingungen entgegenzuwirken und den Fahrkomfort zu verbessern, sind Schwingungstilger bekannt geworden, bei denen der Gasgenerator als Schwingmasse verwendet wird.

### Stand der Technik

Durch das Gebrauchsmuster DE 299 02 033 U1 ist ein Airbagmodul bekanntgeworden bei dem ein Montagezylinder aus einem elastischen Werkstoff verwendet wird, dessen Ränder einerseits mit einem am Gasgeneratorträger angeordneten ringförmigen Montageblech und andererseits mit einem mit dem Gehäuse des Gasgenerators verbundenen umlaufenden Montageflansch verbunden sind. Hierdurch wird eine gute Abdichtung für die aus dem Gasgenerator austretenden Gase und ein vertretbares Schwingungsverhalten erreicht. Die Verbindung zwischen dem Montagezylinder und dem Montageblech beziehungsweise Montageflansch ist jedoch nicht zufriedenstellend. Von Nachteil ist auch, dass eine nachträgliche Montage des Gasgenerators problematisch ist.

Eine andere Verbindungsmöglichkeit zwischen dem Behälter des Gasgenerator und dem Befestigungsflansch ist der älteren DE 100 566 25 zu entnehmen, bei der die Verbindung zwischen dem Federelement und dem Gasgeneratorbehälter und/oder dem Befestigungsflansch als formschlüssige Schnappverbindung beziehungsweise /-verbindungen ausgebildet sind. Außerdem wurde das Federelement als kegelstumpfförmiges hohles Federelement ausgestaltet, wodurch ein verbessertes Schwingungsverhalten für die Schwingmasse erreicht wird.

Eine weitere Möglichkeit wird in der EP 1 101 663 gezeigt.

### Darstellung der Erfindung

Der Erfindung liegt die Aufgabe zugrunde eine sicher und einfach herstellbare Verbindungsmöglichkeit zwischen dem Federelement und dem Gasgeneratorbehälter und/oder zwischen dem Federelement und Airbaggehäuse herzustellen. Der Gasgeneratorbehälter soll möglichst leicht innerhalb des Airbagmoduls am Lenkrad montiert oder auch ausgetauscht werden können. Dabei soll die Funktion des Gasgenerators nicht beeinträchtigt werden.

Die Lösung der gestellten Aufgabe erfolgt bei einem Gasgenerator der eingangs genannten Gattung erfindungsgemäß dadurch, dass die Elemente des Gasgeneratorbehälters eine flanschartige Form haben und mit druckknopfartigen Steck- oder Aufnahmeteilen versehen sind, die in korrespondierende Aufnahme- oder Steckteile von an dem Gasgeneratorbehälter und/oder Airbaggehäuse vorhandenen Anschlussflanschen ein- beziehungsweise aufsteckbar sind. Bei dieser Konstruktion ist es möglich, zunächst den Gasgeneratorbehälter herzustellen, mit einer Treibstofffüllung zu versehen und sodann in sehr einfacher Weise am Federelement zu befestigen. Das Federelement seinerseits kann vorher am Airbaggehäuse angebracht sein oder gegebenenfalls zusammen mit dem Gasgenerator in die im Airbaggehäuse vorhandene Öffnung eingefügt und dann am Airbaggehäuse befestigt werden. In der einfachsten Ausführungsform kann das Federelement und seine Elemente für die Schnappverbindung aus dem gleichen Material hergestellt sein. Hierdurch ergibt sich ein besonders einfaches Herstellverfahren für das Federelement und die daran angebrachten Schnappelemente.

Möglich ist aber auch, dass die Schnappelemente aus Metall bestehen, die durch Vulkanisation mit dem Federelement verbunden sind. Hierdurch können besonders sichere Verbindungen zwischen dem Federelement und dem Gasgeneratorbehälter beziehungsweise Airbaggehäuse hergestellt werden. Letztere sind hierfür mit entsprechenden Flanschen zu versehen.

### Kurzbeschreibung der Zeichnung

In der Zeichnung ist ein Ausführungsbeispiel dargestellt. Es zeigt:
- Fig. 1: einen Gasgeneratorbehälter in der Seitenansicht und seine Halterung durch ein Federelement wobei letzteres im Schnitt gezeigt ist.
- Fig. 2: eine Draufsicht auf den Gasgenerator mit Federelement und
- Fig. 3: das Detail x aus der Fig. 1 in vergrößertem Maßstab.

### Ausführung der Erfindung

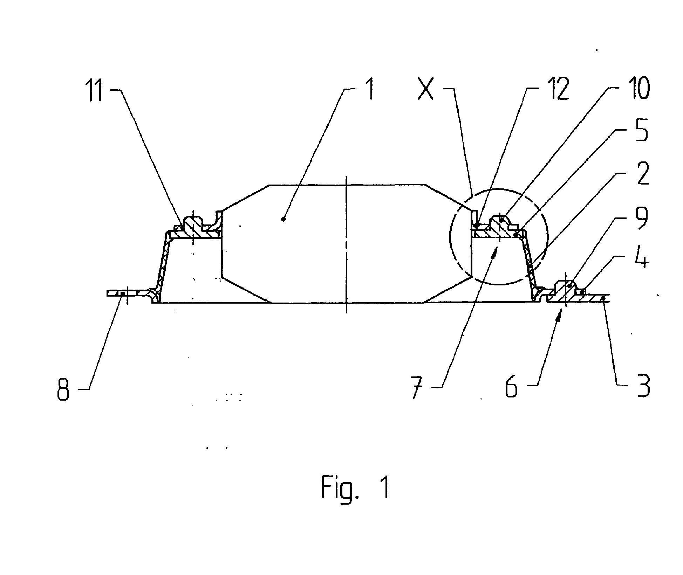

In der Fig. 1 ist ein Gasgeneratorbehälter 1 gezeigt, der von dem Federelement 2 an einem im Detail nicht näher gezeigten Airbaggehäuse über den Flansch 3 befestigt ist. Das Federelement 2 ist als hohler Kegelstumpf ausgestaltet und an seinen Rändern jeweils mit einem Flansch 4 und 5 versehen. Im Ausführungsbeispiel sind die Flansche 4 und 5 aus Metall und mit dem Federelement 2 durch Vulkanisation verbunden. Die Flansche 4 und 5 sind Teilelemente der Schnappverbindungen 6 und 7. Hierfür ist der Flansch 4 auf seinem Umfang mit einer Reihe von Öffnungen 8 versehen, in die die Stöpsel 9 des rundumlaufenden Flansches 3 druckknopfartig einsteckbar sind. Der obere Flansch 5 des Federelements 2 ist seinerseits mit den Stöpseln 10 versehen, die in entsprechende Öffnungen 11 des Flansches 12 eingesteckt sind. Der Flansch 12 ist am Behälter 1 fest angebracht.

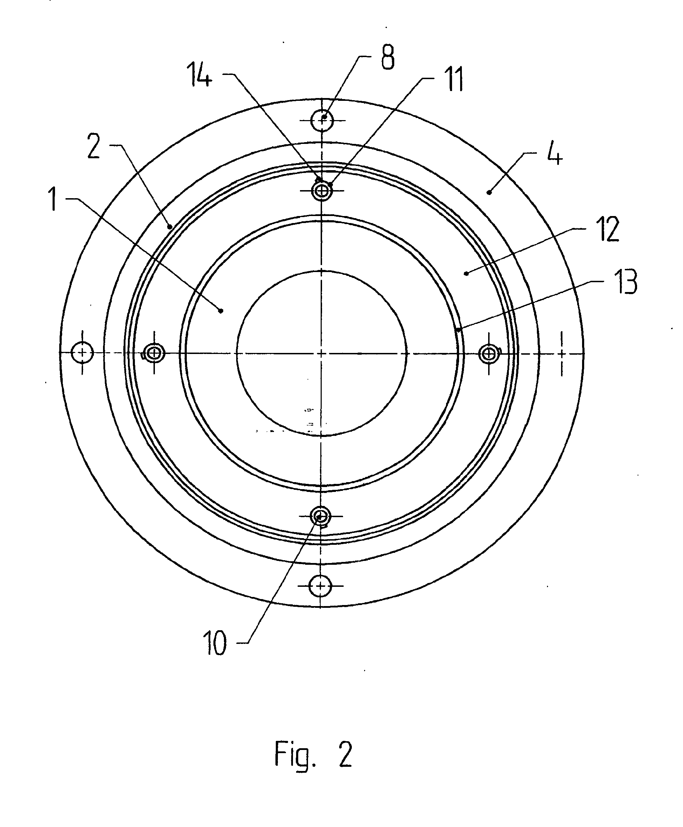

Die Fig. 2 zeigt eine Draufsicht auf eine Konstruktion nach der Fig. 1. Dabei ist der Anschlussflansch 3 zum Airbaggehäuse weggelassen. Sichtbar ist der Flansch 4, auf dessen Umfang verteilt die Öffnungen 8 für die Aufnahme der Stöpsel 9 des Flansches 3 vorgesehen sind. Nur der Vollständigkeit halber sei bemerkt, dass hier auch jede andere Verbindung, z.B. eine Schraubverbindung zwischen dem Flansch 3 und dem Flansch 4 über die Öffnungen 8 vorgenommen werden kann, sofern der Flansch 3 ebenfalls mit den entsprechenden Öffnungen versehen ist. Der Flansch 12 ist mit dem Gasgeneratorbehälter 1 über eine Schrumpfverbindung verbunden. Hierfür ist der Flansch 12 mit einem Bördelrand 13 versehen. Der Flansch 12 hat ebenfalls Öffnungen 11, durch die die Stöpsel 10 des Flansches 5 gesteckt sind. Der Flansch 5 ist durch Vulkanisation mit dem Federelement 2 verbunden. An den Stöpseln 10 sind jeweils die Nasen 14 angebracht, die beim Einstecken der Stöpsel 10 in die Öffnungen 11 einrasten und auf diese Weise zur besonderen Sicherung der Schnappverbindung beitragen.

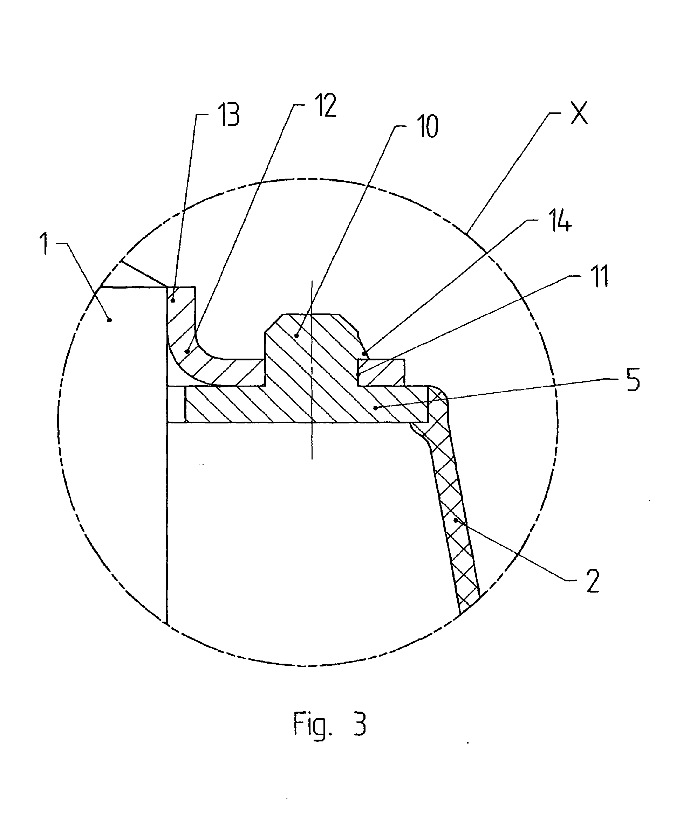

In der Fig. 3 ist in vergrößertem Maßstab des Detail x aus Fig. 1 gezeigt. Am Federelement 2 ist der Flansch 5 anvulkanisiert. Der Flansch 5 ist mit den Stöpseln 10 versehen, welche in die Öffnungen 11 im Flansch 12 eingesteckt sind. Der Flansch 12 hat die Bördelkante 13 über die er fest mit dem Gasgeneratorbehälter 1 verbunden ist. Die Stöpsel 10 haben die Nasen 14, die beim Einstecken der Stöpsel 10 in die Öffnungen 11 am Flansch 12 einrasten.

## Patentansprüche

1. Gasgenerator mit einem Behälter zur Aufnahme der Treibstoffpatrone für einen Airbag am Lenkrad eines Kraftfahrzeugs, wobei der Gasgenerator als Schwingungstilger ausgebildet ist und über ein gasundurchlässiges, die Form eines hohlen Zylinders oder Kegelstumpfs aufweisenden Federelements aus polymerem Material mit dem Airbaggehäuse verbunden ist, und die Verbindung zwischen dem Federelement und dem Behälter und/oder zwischen dem Federelement und Airbaggehäuse als formschlüssige Schnappverbindung bzw. -verbindungen ausgebildet sind, wobei das Federelement als separater Einsatz ausgestaltet ist und an seinen Rändern mit rundumlaufenden Elementen der Schnappverbindung versehen ist, **dadurch gekennzeichnet, dass** die Elemente (4, 5) eine flanschartige Form haben und mit druckknopfartigen Steck- oder Aufnahmeteilen (9, 10; 8; 11) versehen sind, die in bzw. auf korrespondierende Aufnahme- oder Steckteile (8, 9, 10, 11) von an dem Gasgeneratorbehälter (1) und/oder Airbaggehäuse vorhandene Anschlussflansche (3, 12) ein- beziehungsweise aufsteckbar sind.

2. Gasgenerator nach Anspruch 1, **dadurch gekennzeichnet, dass** die Elemente (4,5) und das Federelement (2) aus dem gleichen Material sind.

3. Gasgenerator nach Anspruch 1, **dadurch gekennzeichnet, dass** die Elemente (4,5) aus Metall sind.

4. Gasgenerator nach Anspruch 3, **dadurch gekennzeichnet, dass** die Elemente (4, 5) durch Vulkanisation mit dem Federelement (2) verbunden sind.

5. Gasgenerator nach einem der Ansprüche 1 bis 4, **dadurch gekennzeichnet, dass** die Steckteile (9, 10) mit Einrastnasen (14) versehen sind.

## Claims

1. Gas generator with a container for receiving the propellant cartridge for an airbag on the steering wheel of a motor vehicle, the gas generator being designed as a vibration damper and being connected to the airbag housing via a gas-impermeable spring element having the form of a hollow cylinder or cone frustum and being made from polymeric material, and the connection between the spring element and the container and/or between the spring element and the airbag housing being designed as positive snap connections or as a positive snap connection, the spring element being configured as a separate insert and being provided at its margins with encircling elements of the snap connection, **characterized in that** the elements (4, 5) have a flange-like form and are provided with pushbutton-like plug or reception parts (9, 10; 8; 11) which can be respectively plugged into or onto corresponding reception or plug parts (8, 9, 10, 11) of connecting flanges (3, 12) present on the gas generator container (1) and/or airbag housing.

2. Gas generator according to Claim 1, **characterized in that** the elements (4,5) and the spring element (2) are made from the same material.

3. Gas generator according to Claim 1, **characterized in that** the elements (4,5) are made from metal.

4. Gas generator according to Claim 3, **characterized in that** the elements (4, 5) are connected to the spring element (2) by vulcanization.

5. Gas generator according to one of Claims 1 to 4, **characterized in that** the plug parts (9, 10) are provided with latching noses (14).

## Revendications

1. Générateur de gaz avec un réservoir destiné à contenir une cartouche de gaz propulseur pour un airbag de volant de véhicule automobile, dans lequel le générateur de gaz se présente sous la forme d'un amortisseur d'oscillations et est relié à l'enceinte d'airbag par un élément de ressort imperméable au gaz et présentant la forme d'un cylindre ou d'un tronc de cône creux en matériau polymère, et la liaison entre l'élément de ressort et le réservoir et/ou la liaison entre l'élément de ressort et l'enceinte d'airbag est/sont réalisée(s) sous la forme d'assemblage(s) à déclic, dans lequel l'élément de ressort est formé comme insert séparé et est muni sur ses bords d'éléments périphériques de l'assemblage à déclic, **caractérisé en ce que** les éléments (4, 5) ont une forme du genre bride et sont munis de pièces d'insertion ou de réception du genre bouton poussoir (9, 10; 8; 11), qui peuvent être insérées dans ou posées sur des pièces de réception ou d'insertion correspondantes (8, 9, 10, 11) de brides de raccordement (3, 12) présentes sur le réservoir du générateur de gaz (1) et/ou sur l'enceinte d'airbag.

2. Générateur de gaz selon la revendication 1, **caractérisé en ce que** les éléments (4, 5) et l'élément de ressort (2) sont constitués du même matériau.

3. Générateur de gaz selon la revendication 1, **caractérisé en ce que** les éléments (4, 5) sont en métal.

4. Générateur de gaz selon la revendication 3, **caractérisé en ce que** les éléments (4, 5) sont assemblés à l'élément de ressort (2) par vulcanisation.

5. Générateur de gaz selon l'une quelconque des revendications 1 à 4, **caractérisé en ce que** les pièces d'insertion (9, 10) sont munies d'ergots d'encliquetage (14).
